(19) Europäisches Patentamt / European Patent Office / Office européen des brevets

(11) **EP 3 006 121 B1**

(12) **EUROPEAN PATENT SPECIFICATION**

(45) Date of publication and mention
of the grant of the patent:
**20.11.2019 Bulletin 2019/47**

(51) Int Cl.:
**B09B 5/00** (2006.01)          **B09C 1/00** (2006.01)
**C01F 11/46** (2006.01)          **C02F 11/00** (2006.01)

(21) Application number: **14804081.9**

(22) Date of filing: **13.03.2014**

(86) International application number:
**PCT/JP2014/056775**

(87) International publication number:
**WO 2014/192366 (04.12.2014 Gazette 2014/49)**

(54) **COMPOSITION AND METHOD FOR TREATING DEBRIS**

ZUSAMMENSETZUNG UND VERFAHREN ZUR BEHANDLUNG VON SCHUTT

COMPOSITION ET PROCÉDÉ DE TRAITEMENT DE DÉBRIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2013 JP 2013115521**

(43) Date of publication of application:
**13.04.2016 Bulletin 2016/15**

(73) Proprietor: **Yoshino Gypsum Co., Ltd.
Chiyoda-ku
Tokyo 100-0005 (JP)**

(72) Inventors:
• **YAMAGUCHI, Masato**
**Tokyo 100-0005 (JP)**
• **SUGANO, Kenichi**
**Tokyo 100-0005 (JP)**
• **MIURA, Shinichi**
**Tokyo 100-0005 (JP)**
• **ICHINO, Yusuke**
**Tokyo 100-0005 (JP)**

(74) Representative: **Blodig, Wolfgang
Wächtershäuser & Hartz
Patentanwaltspartnerschaft mbB
Weinstrasse 8
80333 München (DE)**

(56) References cited:
**JP-A- H0 975 772          JP-A- H07 136 613
JP-A- 2006 281 080          JP-A- 2009 263 583
JP-A- 2012 176 394          JP-A- 2012 176 394**

## Description

**Technical Field**

The present invention relates to a technology that is useful for treating debris which contains destroyed structures or the like, and more specifically, the present invention relates to a composition for treating debris that makes it possible to separate debris containing earth and sand firmly adhered thereto, particularly debris containing earth and sand wetted by sea water and agglutinated thereto, into debris and the earth and sand easily, and the present invention also relates to a method for treating debris conducted using the composition.

**Background Art**

Conventionally, a large amount of debris has been produced associated with the collapse of buildings, structures, and so on in addition to human damage when a large earthquake hits urban areas, and the disposal of the debris has been a problem. For example, in the Great East Japan Earthquake occurred March 11, 2011, huge tsunami occurred, causing a catastrophic damage to coasts, and the disposal of a huge amount of debris has been a great problem in implementing reconstruction from the disaster. The debris contains miscellaneous substances such as concretes, wood, metals, and synthetic resins, and when the debris is disposed it is necessary that these substances be separated, however such debris in particular is covered in earth and sand, and therefore the earth and sand have to be removed from the debris in the first place.

Various proposals have been made so far on the method for separating debris. For example, there have been proposed a method (Patent Literature 1) in which debris containing an object that precipitates and an object that floats mixed therein is put into a water tank filled with water to separate the object that precipitates and the object that floats, and a method (Patent Literature 2) which considers the disposal of debris produced in the Great East Japan Earthquake as primary use, and in which various kinds of substances are added to waste that contains water-containing charged particles and foreign bodies, then the resultant mixture is kneaded, and thereafter screening is conducted. It has been pointed out to Patent Literature 2 that it is difficult to transport the debris as it is to an accumulation place because the debris produced during the disaster contains a large amount of earth and sand having a high water content ratio, and it has also been pointed out that the method described in Patent Literature 1 is a proposal that cannot be adopted in the disaster-stricken areas because the method requires a large amount of treatment water and also requires post-treatment. And, according to the method described in Patent Literature 2, it is considered that a state is made possible in which the water-containing charged particles (such as clay, silt, and colloidal particles) and foreign bodies can be modified and screened while the water-containing state of the charged particles and foreign bodies is maintained and, besides, the particles are made easy to detach from the foreign bodies, and by conducting screening thereafter, it is possible to efficiently separate foreign bodies.

Specifically, it is described in the invention disclosed in Patent Literature 2 that the debris produced in the Great East Japan Earthquake has a high water content ratio, which makes it difficult to conduct treatment by screening, and therefore, by using a particular compound that is capable of chemically binding the water-containing charged particles (such as clay, silt, and colloidal particles), the particles become easy to detach from the foreign bodies. A proposal similar to the above-described proposal has also been made regarding soil generated by construction, and in the invention disclosed in Patent Literature 3, there is provided a proposal that screening be conducted after mixing the soil generated by construction and a substance having a function of aggregating soil, such as a polymer, with a mixer from the reason that surplus soil having a high water content ratio has a high adhesiveness and easily adheres to a mixer or the like to make the treatment difficult to conduct.

**Citation List**

**Patent Literature**

Patent Literature 1: Japanese Patent Laid-Open No. 09-075772
Patent Literature 2: Japanese Patent Laid-Open No. 2012-176394
Patent Literature 3: Japanese Patent Laid-Open No. 07-136613 JP 2009 263583 discloses a soil reforming composition.

## Summary of Invention

### Technical Problem

However, according to the studies conducted by the present inventors, as a result of mingling of the various substances destroyed and torn by strong force of tsunami with sludge of the bottom of the sea being cast ashore by tsunami and a large amount of soil, earth and sand, etc. shaved off by tsunami, a large amount of these earth and sand etc. is agglutinated to debris, particularly the debris produced in the Great East Japan Earthquake, and since the amount of these earth and sand etc. is enormous, it is difficult to separate the earth and sand etc. from the debris by the conventional technologies in which such situation is unexpected or even by the above-described conventional technologies that have been proposed since the disaster, and thus there has been a problem yet to be solved. Moreover, in the conventional technologies, it often occurs that the use of a large amount of chemicals (chemical agents) is needed and there is a concern over the influence of the treated products after treatment on the environment. Further, as mentioned previously, the treatment of an enormous amount of debris, particularly the separation of the earth and sand from the debris is a prerequisite for the restoration from the disasters, and the resolution has been a pressing need. Hereinafter, the sludge of the bottom of the sea, the soil, the earth and sand, etc. are also simply referred to as "the earth and sand" altogether.

Accordingly, an object of the present invention is to provide a useful technology that makes it possible to easily, simply, and effectively separate earth and sand from debris containing the earth and sand firmly adhered thereto without exerting a bad influence on the environment, such separation being a prerequisite for the disposal of debris containing earth and sand firmly adhered thereto, particularly an enormous amount of debris produced through the mingling of the various substances destroyed and torn by strong force of tsunami or the like with the earth and sand carried by tsunami or the like.

### Solution to Problem

The above-described object is achieved by the following present invention. That is to say, the present invention provides a composition according to claim 1 for treating debris in order to separate earth and sand from the debris containing the earth and sand adhered thereto, the composition comprising at least 0.1 to 10 mass parts of a polymer flocculant relative to 100 mass parts of gypsum, wherein the gypsum has a BSA specific surface area of 15000 cm$^2$/g or less, and the polymer flocculant takes a form of a powder comprising 95% or more of particles having a particle diameter of 200 $\mu$m or less.

Preferable embodiments of the composition for treating debris of the present invention include the followings: the gypsum has a BSA specific surface area of 10000 cm$^2$/g or less; the polymer flocculant takes a form of a powder comprising 95% or more of particles having a particle diameter of 150 $\mu$m or less; the polymer flocculant takes a form of a powder comprising 90% or more of particles having a particle diameter of 10 $\mu$m or more; the polymer flocculant is an anionic or nonionic polymer flocculant; the polymer flocculant is a synthetic polymer compound having a chain structure that may have a branch; and the gypsum is hemihydrate gypsum or type III anhydrous gypsum, and 95% or more of the gypsum has a particle diameter of 700 $\mu$m or less.

The present invention provides, as another embodiment, a method according to claim 7 for treating debris in order to separate earth and sand from the debris containing the earth and sand adhered thereto, the method comprising: a treatment step of adding gypsum and a polymer flocculant separately or adding gypsum and a polymer flocculant in a state where the gypsum and the polymer flocculant are mixed in advance to the debris containing the earth and sand adhered thereto, and then kneading the resultant mixture; and a separation step of separating a kneaded product obtained in the treatment step into the debris and the earth and sand adhered to the debris, wherein 10 to 100 kg of the gypsum and 0.01 to 10 kg of the polymer flocculant are relative to 1 m$^3$ of the debris are added to the debris in the treatment step, wherein the gypsum has a BSA specific surface area of 15000 cm$^2$/g or less, and the polymer flocculant takes a form of a powder comprising 95% or more of particles having a particle diameter of 200 $\mu$m or less.

Preferable embodiments of the method for treating debris of the present invention include the followings: 95% or more of the gypsum has a particle diameter of 700 $\mu$m or less; the gypsum has a BSA specific surface area of 10000 cm$^2$/g or less; the polymer flocculant takes a form of a powder comprising 95% or more of particles having a particle diameter of 150 $\mu$m or less; the polymer flocculant takes a form of a powder comprising 90% or more of particles having a particle diameter of 10 $\mu$m or more; the polymer flocculant is an anionic or nonionic polymer flocculant; the polymer flocculant is a synthetic polymer compound having a chain structure that may have a branch; the gypsum is hemihydrate gypsum or type III anhydrous gypsum; and the debris containing earth and sand adhered thereto is debris containing earth and sand having a high agglutination property attributable to sea water, the earth and sand adhered to the debris.

**Advantageous Effects of Invention**

According to the present invention, there is provided a composition for treating debris that: makes it possible to separate earth and sand firmly fixed to debris from the debris by an extremely simple operation conducted to the debris being produced through mingling by sea water and containing a large amount of the earth and sand, such as the debris produced in the Great East Japan Earthquake; and makes it possible to simply, efficiently, and easily separate the earth and sand from the debris which solves an important problem in the treatment of debris, and there is also provided a method for treating debris that is conducted using the composition. Further according to the present invention, a composition for treating debris and a method for treating debris are provided that make it possible to separate the earth and sand from the debris in such a state that the treated products after separation treatment never exert a bad influence on the environment.

**Description of Embodiments**

Hereinafter, the present invention will be explained in more detail giving preferable embodiments. The present inventors have conducted studies on the characteristics of the debris containing earth and sand agglutinated thereto, particularly the debris produced in the Great East Japan Earthquake, in order to solve the above-described problem. As a result thereof, the debris produced from the various substances destroyed by huge tsunami and carried together with the earth and sand by the tsunami is wetted by sea water, therefore the earth and sand are firmly adhered to the debris in such a way that the earth and sand are in a sticky state even if the debris is dried, which is different from debris produced from usual construction sites or produced simply from collapsed buildings, and the present inventors have recognized that it is extremely difficult to separate the earth and sand from the debris. And, a method that is capable of easily separating the earth and sand firmly adhered to the debris in such a sticky state (hereinafter, referred to as agglutination property) with a simple method has not conventionally been known, and the present inventors consider it as urgent business to solve the problem and have conducted diligent studies.
The present inventors have found that, in the course of detailed studies, the cause for the earth and sand produced in the Great East Japan Earthquake and adhered to the debris to have a high agglutination property is because a sodium component derived from sea water is incorporated in the earth and sand, particularly in a clay mineral having a layered structure, considering that the debris is produced through the mingling of the various substances destroyed by sea water with the earth and sand. The present inventors have conducted diligent studies for the purpose of separating the earth and sand having a high agglutination property from the debris based on such a finding, and have reached the present invention.
The present inventors have confirmed the problem of conventional methods for treating debris described below as a premise of studies. First of all, as a conventional method for treating debris, there is a method for separating an object that precipitates and an object that floats by putting debris into a water tank, such as the method proposed in Patent Literature 1 as described previously, however, with this method, the scale of facilities becomes large because facilities equipped with a water tank become necessary, and besides, a large amount of treatment water is produced after treatment, resulting in the need for secondary facilities to deal with the treatment water, which makes it difficult to adopt the method in the disaster-stricken areas.
Facing the above-described difficulty, various methods for separating earth and sand from debris by conducting screening after reducing the water content ratio of the earth and sand have been devised as a method for making it possible to simply separate earth and sand from debris even in the disaster-stricken areas. However, as mentioned below, any of the methods has been difficult to say that it is the optimum method. Specifically, there is a method in which screening is conducted after the debris containing earth and sand is dried by solar drying or heat treatment, however there is a problem in such a method that the place for solar drying has to be secured or the energy for heating becomes huge when the amount of debris is huge. Further, according to the studies conducted by the present inventors, since the earth and sand produced in the Great East Japan Earthquake in particular have a high agglutination property, it has been difficult to separate the earth and sand from the debris even after the adhered earth and sand are dried by the above-described methods. Furthermore, there is also a method in which the water content ratio is reduced by adding a modifying material such as quick lime, and thereafter screening is conducted, however even when the method is applied to the debris containing earth and sand having a high agglutination property and adhered thereto, it is difficult to separate the earth and sand from the debris even though the water content ratio can be reduced. Moreover, there is concern over the generation of a harmful gas such as ammonia when the treatment is conducted adding the modifying material such as quick lime, and this case raises another problem that the treated products may exert a bad influence on the surrounding environment, which is similar in the case where the debris is heat-treated.
In the above-described technology that is applied to the soil generated by construction and is described in Patent Literature 3, it is described that a water soluble polymer powder having a function of aggregating soil is added and mixed into surplus soil having a high adhesiveness and having a high water content ratio, and thereafter screening is conducted, thereby making it possible to change soft soil or soil having a high adhesiveness and having a high water content ratio into soil that is reusable for construction work such as backfilling and in which fluidity similar to that of sand is imparted. The present inventors tried to apply, to the above-described soil generated by construction, the technology for separating earth and sand from debris containing the earth and sand having a high agglutination property and adhered thereto. Certainly, it is considered that there was not a bad influence on the environment, and the effect of reducing the water content ratio of the earth and sand was obtained, however the performance of separating the earth and sand from the debris was not sufficient, and a large amount of the earth and sand that was firmly adhered to the debris was not able to be separated simply.

As a result of the above-described study, it has been confirmed that in the case of the debris containing the earth and sand having a high agglutination property and firmly adhered thereto, the separation property of earth and sand from debris is insufficient and the earth and sand cannot easily be peeled from the debris even if the water content ratio of the earth and sand after treatment is sufficiently reduced, which is different from usual debris. Particularly in the case of the debris produced in the Great East Japan Earthquake, even when the water content ratio of the earth and sand is sufficiently reduced, it has been found that the agglutination property of the earth and sand after treatment cannot sufficiently be reduced, which is the reason that the earth and sand cannot sufficiently be separated from the debris.

Further, since the debris produced due to huge tsunami is produced through the mingling of the various substances destroyed by sea water with the shaved-off earth and sand and the sludge of the bottom of the sea while the various substances, the earth and sand, and the sludge of the bottom of the sea are carried by sea water, a large amount of a sodium component contained in sea water is contained in the debris produced due to huge tsunami, and since the sodium component is incorporated in the soil (clay mineral) within the earth and sand, it has confirmed that the sodium component contained in the soil cannot easily be removed even when washing with water is conducted. And the present inventors have come to a conclusion that the sodium component contained in the earth and sand allows the earth and sand to exhibit a high agglutination property to the debris, which is the reason why the agglutination property of the debris was not able to be reduced by the conventional treatment intended for reducing the water content ratio. From this fact, the present inventors have considered that it is important to achieve both the reduction in the water content ratio of debris and the reduction in the agglutination property by realizing, in the object to be treated, the reduction in the sodium component of the debris in addition to the reduction in the water content ratio of the debris, which, if realized, makes the separation of the earth and sand from the debris easy.

Based on the above-described recognition, the present inventors have conducted diligent studies for the purpose of finding a method that is capable of achieving, in the treated product, both the reduction in the water content ratio of the debris and the reduction in the agglutination property of the earth and sand (reduction in the sodium component within the earth and sand) to find out the combination of useful substances with which the above-described effect is obtained by a simple method, and the present inventors have reached the present invention. Specifically, the present inventors have found that both the reduction in the water content ratio of debris and the reduction in the agglutination property can be achieved to realize the remarkable effect of the present invention by the extremely simple constitution in which treatment of debris is conducted using 100 mass parts of gypsum having a particular specific surface area and 0.1 to 10 mass parts of a polymer flocculant in a form of a powder having a particular particle diameter and having a uniform particle size. Specifically, when debris being produced due to tsunami in the Great East Japan Earthquake and containing earth and sand having a high agglutination property and adhered thereto, the debris being concern at present, is treated as the object to be treated using a composition for treating debris of the present invention containing the above-described two kinds of substances, the present inventors have found a surprising effect that the earth and sand that have been firmly adhered to the debris can easily be peeled (detached) from the debris in such a way that the earth and sand became crumbled, and can easily be separated from the debris by conducting screening after the treatment.

The present inventors consider as follows with respect to the reason why the above-described remarkable effect is obtained. First of all, the sodium component incorporated in the soil (clay mineral) that is the cause of the high agglutination property is substituted by a calcium component derived from the gypsum that constitutes the composition for treating debris by conducting kneading treatment of the debris containing the earth and sand firmly adhered thereto using the composition for treating debris of the present invention. The substituted sodium component dissolves in water contained in the debris, and further is absorbed together with water in the polymer flocculant that constitutes the composition for treating debris. The present inventors consider that the reason why both the reduction in the water content ratio of the debris and the reduction in the agglutination property can be achieved is as a result of a series of the above-described phenomena. Further, in addition to the above-described phenomena, the present inventors consider that the gypsum itself that constitutes the composition for treating debris is smooth to become a factor of making it possible to effectively reduce the agglutination property of the earth and sand adhered to the debris and making the peeling from the debris easy.

The present inventors conducted the following experiment in order to confirm the above-described reason. That is to say, the amount of a sodium ion contained in an extraction liquid obtained by extraction with a water solvent using, as a sample, earth and sand adhered to debris and the amount of a sodium ion contained in an extraction liquid obtained by extraction with a water solvent using, as a sample, treated soil obtained by treatment for separating the earth and sand from the debris using the composition for treating debris of the present invention were measured, and the measured values were compared. As a result of the comparison, the extraction liquid obtained using, as a sample, the treated soil treated with the composition for treating debris of the present invention clearly contained a larger amount of sodium ion than the extraction liquid in the case where the composition was not used. Also from the result, it is verified that the sodium component adhered to the soil was substituted by the calcium component derived from the gypsum that constitutes the composition for treating debris by treating debris using the composition for treating debris of the present invention.

Hereinafter, each component that constitutes the composition for treating debris of the present invention will be explained.

[Composition for Treating Debris]

(Gypsum)

As the gypsum that constitutes the composition for treating debris of the present invention, any of dihydrate gypsum, hemihydrate gypsum, anhydrous gypsum (type I anhydrous, type II anhydrous, and type III anhydrous) can be used, however it is more preferable that the gypsum is the hemihydrate gypsum or the type III anhydrous gypsum considering the point that the strength to a certain extent is often required in disposing earth and sand adhered to debris. Moreover, the hemihydrate gypsum and the type III anhydrous gypsum are excellent in hygroscopicity, and therefore has also an advantage of being excellent in the performance of preventing the occurrence of trouble that the polymer flocculant becomes a lump by absorbing moisture when compared with the dihydrate gypsum and the type II anhydrous gypsum. As mentioned previously, when the composition for treating debris of the present invention is used by kneading the composition with debris, it is made possible to reduce the agglutination property of earth and sand (soil) by replacing sodium contained in the earth and sand (soil) adhered to the debris with calcium that is a constituent component of the gypsum (sodium component dissolves in water). Moreover, according to the studies conducted by the present inventors, the composition for treating debris of the present invention can suppress the occurrence of the trouble that the polymer flocculant becomes a lump, which becomes a problem in storing the polymer flocculant that is used together with the gypsum for the sake of stock or the like, by using the gypsum as a constituent component. According to the studies conducted by the present inventors, the composition for treating debris can be stored for a long period of time as the composition for treating debris of the present invention as long as the composition satisfies the blending ratio as specified in the present invention. Accordingly, the packaging of the composition for treating debris of the present invention can be made as a mixture that contains gypsum and a polymer flocculant, and by making the packaging in this way, the practicability can be improved. However, the composition for treating debris of the present invention is not limited to such an embodiment, and an embodiment may be adopted, depending on the using status, in which the gypsum as specified in the present invention and the polymer flocculant as specified in the present invention are separately packed as a set, and are used together at the time of use.

Further, according to the studies conducted by the present inventors, when the gypsum that constitutes the composition for treating debris of the present invention has a BSA specific surface area of 15000 cm$^2$/g or less, an effect at a high level is obtained. When the gypsum has a BSA specific surface area of more preferably 10000 cm$^2$/g or less, further preferably 5000 cm$^2$/g or less, a more remarkable effect is obtained. That is to say, according to the studies conducted by the present inventors, the gypsum as a supply source of calcium can appropriately be used regardless of the value of the specific surface area, however the gypsum having the specific surface area as specified in the present invention exhibits a higher performance as the calcium-supplying material in treating the debris, and is easy to substitute for sodium in the soil, and the effect of the present invention is easier to obtain. On the other hand, according to the studies conducted by the present inventors, the gypsum having a large specific surface area, as large as exceeding 15000 cm$^2$/g, is not preferable because such gypsum exerts a certain influence on the polymer flocculant and, as a result thereof, a tendency that the separation efficiency of earth and sand from debris becomes somewhat worse is observed.

Moreover, as mentioned previously, it is considered that, by using the gypsum for constituting the composition for treating debris, the physical property (smooth feeling) of the gypsum itself also becomes a factor of reducing the agglutination property of the earth and sand adhered to the debris. From the reason as described above, it is more preferable that the gypsum that constitutes the composition for treating debris of the present invention takes a form of a powder. Regarding the particle diameter, for example, 95% or more of the gypsum has a particle diameter of 700 $\mu$m or less, more preferably 95% or more of the gypsum has a particle diameter of 600 $\mu$m or less. In addition, the particle diameter is a value measured by a laser diffraction/scattering method and obtained by measuring the gypsum in which paper pieces, small stones, and so on that are mixed from waste gypsum or the like are removed in advance by passing the gypsum through a sieve having an aperture of 1 mm. Moreover, since the gypsum used for the composition for treating debris of the present invention may basically have a function as the supply source of calcium ions as mentioned previously, any of natural gypsum, by-product gypsum, and so on can be used. As a matter of course, waste gypsum, particularly waste gypsum boards can also be used. In using the waste gypsum, even when board base paper and so on contained in the waste gypsum are used as they are in the composition for treating debris without removing paper dusts and so on, there is no problem at all, and such use does not exerts a bad influence.

(Polymer Flocculant)

The polymer flocculant that constitutes the composition for treating debris of the present invention is contained in an amount ranging from 0.1 to 10 mass parts relative to 100 mass parts of the above-described gypsum, and the polymer flocculant in a form of a powder having a uniform particle diameter and containing 95% or more of particles having a particle diameter of 200 $\mu$m or less is used in the present invention. According to the studies conducted by the present inventors, the composition for treating debris of the present invention contains a polymer flocculant as the constituent component, and therefore can absorb and retain water in the soil that is adhered to debris at an early period when the composition for treating debris of the present invention and the debris are kneaded. Moreover, according to the studies conducted by the present inventors, the sodium component that is promptly replaced with calcium supplied by the gypsum as a result of kneading treatment of the composition for treating debris of the present invention with the debris and dissolves in water within the soil is incorporated in the polymer flocculant. In addition, the polymer flocculant has no power of retaining the sodium component itself.

The content of the polymer flocculant that constitutes the composition for treating debris of the present invention is in a range from 0.1 to 10 mass parts relative to 100 mass parts of the gypsum, more preferably 0.5 to 8 mass parts, further preferably 0.5 to 5 mass parts relative to 100 mass parts of the gypsum. That is to say, when the amount of the polymer flocculant is too small, there is a possibility that the above-described effect of the present invention is insufficiently exhibited as a result of shortage of the water absorption amount by the composition for treating debris from the reason that the time for kneading the composition for treating debris with the debris is short. On the other hand, when the content of the polymer flocculant is much larger than the above-described range, the polymer flocculant becomes a lump in the composition for treating debris in storing the composition for treating debris and the trouble that the water-absorbing performance of the polymer flocculant is lowered. The debris that is an object of treatment of the composition for treating debris of the present invention is, as mentioned previously, debris containing earth and sand having a high agglutination property and adhered thereto, and therefore when the debris to be treated has a high water content, it is preferable to use a composition for treating debris in which the addition amount of the polymer flocculant that constitutes the composition for treating debris of the present invention and is used for the treatment is large.

The polymer flocculant that constitutes the composition for treating debris of the present invention is not particularly limited, however, among others, it is preferable to use a flocculant consisting of a synthetic polymer compound having a chain structure that may have a branch. That is to say, in the present invention, any of the synthetic polymer compounds having a straight chain structure without a branch, which are also referred to as linear polymers, straight chain polymers, or rod-like polymers, and the synthetic polymer compounds having a chain structure containing a branched chain, which are also referred to as branched polymers or ramified polymers can suitably be used. According to the studies conducted by the present inventors, as will be mentioned later, the earth and sand having an agglutination property and having been adhered to the debris is more easily peeled from the debris and the effect of the present invention is more remarkably obtained when the above-described polymer flocculant (hereinafter, also simply referred to as polymer flocculant having a chain structure) that may have a branch is applied as compared when a polymer flocculant (hereinafter, also simply referred to as polymer flocculant having a netlike structure) consisting of a netlike polymer compound that is also called a netlike polymer or a crosslinked polymer, the netlike polymer having a three-dimensional structure is applied. Specifically, in the treatment where the polymer flocculant having a netlike structure is applied, there is a tendency that the substitution efficiency when sodium that is present in the soil is substituted by calcium supplied by the gypsum is somewhat lowered is observed as compared with the treatment where the polymer flocculant having a chain structure is applied. On the other hand, the treatment of debris that is wetted by sea water and that contains earth and sand firmly agglutinated thereto is considered to be a particularly important issue in the present invention, and in the treatment, as the substitution efficiency by calcium from the sodium in sea water incorporated in the soil that becomes a cause of the firm agglutination is higher, the firm agglutination can be reduced more and the earth and sand can more easily be peeled from the debris. It has been confirmed by the tests for studies on the actual debris as will be mentioned later that the earth and sand having a high agglutination property and having been adhered to the debris can easily be peeled from the debris by using the polymer flocculant having a chain structure.

The kind of the polymer flocculant used in the present invention is also not particularly limited, and any of the polymer flocculants, such as anionic, nonionic, and cationic polymer flocculants, that have been conventionally used for treatment or the like of industrial waste water can be used. Specifically, any of the polymer flocculants can preferably be used as long as the polymer flocculants are used for aggregating and precipitating suspended substances in industrial waste water. Examples of the polymer flocculant include: polymers made from a single monomer selected from acrylamide, sodium acrylate, acrylic acid esters, methacrylic acid esters, styrene sulfonic acid, and so on; copolymers synthesized from a plurality of kinds of these monomers; and other polymers. Specific examples of the cationic polymer flocculant include copolymers of acrylamide and dimethylaminoethylacrylate methyl chloride quaternary salt, and so on, and specific examples of the nonionic polymer flocculant include polyacrylamides and so on. Moreover, specific examples of the anionic polymer flocculant include acrylic acid-based polymer flocculants such as copolymers of acrylamide and sodium acrylate, and sulfonic acid-based polymer flocculants such as copolymers of acrylamide and sodium acrylamide-2-methylpropane sulfonate. According to the studies conducted by the present inventors, it is preferable to use nonionic polymer flocculants or anionic polymer flocculants among these, and it is particularly preferable to use anionic polymer flocculants, and to use, among anionic polymer flocculants, acrylic acid-based polymer flocculants. It is considered that the reason is because when the debris wetted by sea water is treated with the composition for treating debris of the present invention, the sodium component incorporated in the soil and derived from sea water is substituted by calcium in the gypsum that is used together in the composition for treating debris, as a result thereof, a state in which the calcium ions exist on the surface of the soil is made, and therefore the use of anionic polymer flocculants can cause the reaction to occur more promptly when compared with the use of cationic or nonionic polymer flocculants. It has been confirmed also by the tests for studies as will be mentioned later that it becomes possible to separate the earth and sand having a high agglutination property and having been adhered to the debris more easily by using the anionic polymer flocculants.

As the polymer flocculant that constitutes the composition for treating debris of the present invention, the polymer flocculant in a form of a powder containing 95% or more of the particles having a particle diameter of 200 $\mu$m or less is used. More preferably, the polymer flocculant in a form of a powder containing 95% or more of the particles having a particle diameter of 150 $\mu$m or less is used. As the particle diameter of the polymer flocculant is smaller, the water-absorbing speed is faster, which enables the operation time in treating debris shorter. However, the particle diameter of the polymer flocculant being too small may cause the occurrence of powder dusts and there is a risk that the working environment is deteriorated, and therefore the polymer flocculant containing 90% or more of particles having a particle diameter of 10 $\mu$m or more, more preferably the polymer flocculant containing 95% or more of particles having a particle diameter of 10 $\mu$m or more may be used as the polymer flocculant that constitutes the composition for treating debris of the present invention. In addition, the particle diameter of the polymer flocculant is measured by a laser diffraction/scattering method.

(Other Components)

The composition for treating debris of the present invention may contain an aluminum compound or the like in addition to the above-described constituent components. As described in Japanese Patent-Laid Open No. 2010-207659, when a neutralizing agent containing: at least one aluminum compound selected from the group consisting of aluminum oxide, aluminum chloride, aluminum hydroxide, aluminum sulfate, and derivatives thereof; and further a calcium or magnesium component is added and mixed to calcined gypsum (hemihydrate gypsum), elution of heavy metals or the like can effectively be reduced, a favorable solidification performance is exhibited to mud, and further a material for insolubilizing and solidifying heavy metals or the like with which treated products become neutral can be made. It is considered that the debris that is an object of treatment in the present invention may naturally contain a heavy metal, and there is a possibility that the heavy metal is contained in the earth and sand treated with the composition for treating debris of the present invention and peeled from the debris. Accordingly, it is effective that the aluminum compound or the like is contained also in the composition for treating debris of the present invention. Moreover, as described in Japanese Patent Laid-Open No. 2010-208870, the composition in which the aluminum compound is added to calcined gypsum can suppress the generation of hydrogen sulfide when used as a solidification material for soil. Accordingly, it is preferable to make the composition for treating debris of the present invention in a form where the aluminum compound is added. Besides, a pH adjusting agent or the like can appropriately be used as necessary. In addition, it is preferable not to use, as a constituent component, a material such as a lime-based material that reacts with earth and sand when kneaded with the earth and sand. The reason is because when a large amount of a material such as a lime-based material is added, the material such as a lime-based material reacts with a nitrogen component in the soil to generate ammonia, and in this case, there is concern over deterioration of the treatment environment.

[Method for Treating Debris]

The method for treating debris of the present invention includes: a treatment step of adding 10 to 100 kg of gypsum and 0.01 to 10 kg of a polymer flocculant to 1 m$^3$ of debris containing earth and sand adhered thereto, and then kneading the resultant mixture; and a separation step of separating a kneaded product obtained in the treatment step into the debris and the earth and sand adhered to the debris. As a method for adding the gypsum and the polymer flocculant to the debris in conducting the method for treating debris of the present invention, the gypsum and the polymer flocculant may be added separately, or a state where the gypsum and the polymer flocculant are mixed together are made in advance, and the mixture may be added. The debris that is an object of treatment in the present invention is not particularly limited, however when the method for treating debris of the present invention is applied to, for example, debris that is unlawfully dumped in mountains, on seashores, or in other places, debris that is cast ashore on seashores, or other places, and debris produced due to a tidal wave or tsunami, particularly debris produced in the Great East Japan Earthquake, the remarkable effect of the present invention is obtained. By applying the method of the present invention particularly to debris: the separation of which into the earth and sand and the debris has not easily been able to be achieved when any of the conventional methods is applied; that contains a large amount of a sodium component due to an influence of sea water or the like; and that contains the earth and sand having a high agglutination property and adhered to the debris, it becomes possible to easily conduct separation treatment of the earth and sand from the debris, and therefore a bigger effect of the present invention is obtained. That is to say, with the method for treating debris of the present invention, it becomes possible to easily peel the earth and sand from the debris even if the earth and sand that have been adhered to the debris have a high agglutination property by an extremely simple and easy operation in which the gypsum and the polymer flocculant in a form of a powder each specified in the present invention are added to the debris in the ratio as specified in the present invention and then the resultant mixture is kneaded. Specifically, the earth and sand that have firmly adhered to the debris in a sticky state change into a crumbled state that is easy to peel after the above-described kneading operation. The kneader used for the above-described kneading operation is not particularly limited, and any kneader may be used as long as the kneader can achieve the object of the present invention.

The gypsum and the polymer flocculant may be added separately to be mixed as mentioned previously, however the gypsum and the polymer flocculant are mixed in advance, and the resultant mixture can be used in the treatment step. In the case where the gypsum and the polymer flocculant are mixed in advance, when the polymer flocculant is added by more than 10 mass parts relative to 100 mass parts of the gypsum, there is a possibility that the polymer flocculant becomes a lump in the gypsum with time, and therefore it is not preferable to store the mixture of the gypsum and the polymer flocculant for a long period of time. As the gypsum and the polymer flocculant that are used in the method for treating debris of the present invention, the constituent materials of the composition for treating debris of the present invention that have the constitution as explained previously are used. Specifically, the gypsum to be used has a BSA specific surface area of 15000 $cm^2/g$ or less, and the polymer flocculant is in a form of a powder containing 95% or more of particles having a particle diameter of 200 $\mu$m or less. An important thing in the method for treating debris of the present invention is that 10 to 100 kg of the gypsum and 0.01 to 10 kg of the polymer flocculant are added to 1$m^3$ of the debris containing earth and sand adhered thereto and the resultant mixture is kneaded in the treatment step of debris containing the earth and sand adhered thereto.

In the treated product obtained by the method for treating debris of the present invention, the earth and sand having a agglutination property and having been adhered to the debris are changed into a crumbled state as mentioned previously, however the separation operation in the separation step conducted after the treatment step is not particularly limited. Examples of easier methods include, but not limited to, a screening operation in which screening is conducted while the treated product in the above-described state is shaken. The screening operation may be conducted by hand work, or may automatically be conducted by a vibrating screen or the like. Further, an operation of peeling the earth and sand adhered to the debris in a crumbled state from the debris that forms an obj ect to be treated by using a mixer or the like may be conducted before conducting the screening operation to make the earth and sand easy to separate from the debris.

The object to be treated by the method of the present invention is not particularly limited, however, as mentioned previously, it is preferable that the object is debris in which earth and sand having a high agglutination property attributable to a sodium component are firmly fixed to the debris and are not easily peeled from the debris. The effect of the present invention is exhibited more remarkably when such debris is treated. That is to say, as mentioned previously, the action of the composition for treating debris of the present invention is that the gypsum functions as a supply source of calcium, then sodium that is adhered to soil and becomes a cause of the agglutination property of earth and sand is substituted by the calcium, and the substituted sodium dissolves in water that exists in the debris or water that is retained in the polymer flocculant to change the earth and sand having an agglutination property into a crumbled state that is easy to peel by losing the agglutination property, thereby exhibiting a remarkable effect of the present invention when the composition for treating debris of the present invention is kneaded with the debris. The above-described action of the composition for treating debris of the present invention shows that the debris to be treated by the method of the present invention preferably has the water content ratio to some extent. On the other hand, most of debris containing earth and sand adhered thereto has the water content ratio to some extent, particularly most of debris produced in the Great East Japan Earthquake has a water content ratio of at least 30% and contains a large amount of a sodium component derived from sea water, and therefore any of the debris becomes a suitable object of treatment of the present invention. Thus, when the debris to be treated by the treatment method of the present invention has an extremely low water content ratio, it is an effective method to increase the water content ratio by sprinkling the debris with water.

## EXAMPLES

Hereinafter, the present invention will be explained further specifically giving Examples of the present invention, Comparative Example, and Reference Example, however the present invention is not limited to these Examples.

[Example 1 and Comparative Example 1 (Study on Difference in Specific Surface Area of Gypsum Powder)]

Treatment tests for separating earth and sand from debris were conducted to actual debris containing a large amount of earth and sand attributable to huge tsunami generated by the Great East Japan Earthquake, the earth and sand adhered to thereto, using compositions for treating debris each containing a gypsum powder having different characteristics in a manner as described below. The water content ratio of the debris used for the treatment tests was 40%. In the treatment, compositions for treating debris (hereinafter, referred to as material for treating debris) each constituted from 50 kg of hemihydrate gypsum having a different BSA specific surface area as shown in Table 1 and 0.5 kg of a polymer flocculant in a form of a powder containing 95% or more of particles having a particle diameter of 150 $\mu$m or less were used for respective treatment tests. As hemihydrate gypsum constituting each material for treating debris, hemihydrate gypsum in a form of a powder containing 95% or more of particles having a particle diameter of 600 $\mu$m or less was used. Moreover, as the polymer flocculant, an anionic polymer flocculant containing a copolymer (amount of anion: 30 to 35 mol%, anionic degree: 3.6 to 3.8 meq/g, and molecular weight: about 9000000) of acrylamide and sodium acrylate as the main component was used.

Each material for treating debris was evaluated by conducting treatment in a manner as described below with each material for treating debris having the constitution as described above, and then determining the efficiency of peeling the earth and sand that had been adhered to the debris in a manner as described below. First of all, the treatment with each material for treating debris was conducted by the following procedures. To 1 m$^3$ of the above-described debris containing the earth and sand having an agglutination property and adhered thereto, materials for treating debris each containing, as a constituent component, hemihydrate gypsum among various kinds of hemihydrate gypsum each having a different BSA specific surface area as shown in Table 1 were added separately, and then the resultant mixture was kneaded with a mixer for 1 hour. After the kneading, the debris was screened with a screen having an aperture of 9.5 mm. And the weight of the undersize treated soil obtained by the above-described treatment was measured to determine the peeling efficiency in a manner as described below using the total amount of the debris before the treatment containing the earth and sand adhered thereto and used for the treatment and the material for treating debris. Obtained results are shown in Table 1.

```
Peeling efficiency (%)
= [weight of undersize treated soil/(debris + material
for treating debris (gypsum powder + polymer flocculant))] ×
100
```

Table 1: Outline of tests and evaluation results

| (study on influence caused by difference in specific surface area of gypsum powder) | | | | | | | | | |
|---|---|---|---|---|---|---|---|---|---|
| | Example 1-1 | Example 1-2 | Example 1-3 | Example 1-4 | Example 1-5 | Example 1-6 | Example 1-7 | Example 1-8 | Reference Example 1 |
| Specific surface area of gypsum powder ($cm^2/g$) | 500 | 1000 | 2000 | 3000 | 5000 | 8000 | 10000 | 15000 | 18000 |
| Peeling efficiency (%) | 86 | 87 | 88 | 88 | 86 | 82 | 80 | 75 | 70 |

From the results, it was found, as shown in Table 1, that the efficiency of peeling the debris was clearly different depending on the value of the specific surface area of the gypsum powder used for treatment tests. More specifically, it was found that the obtained peeling efficiency was high when the gypsum powder having a BSA specific surface area of 15000 $cm^2/g$ or less, more preferably 10000 $cm^2/g$, and further 5000 $cm^2/g$ or less was used. Moreover, it was confirmed that even when the BSA specific surface area of the gypsum powder was made larger than 15000 $cm^2/g$, preparation of materials became burdensome, and besides, the peeling efficiency tended to be somewhat lowered as shown in Reference Example 1.

[Example 2 (Study on Difference in Kind of Gypsum Powder)]

The same treatment tests as in Example 1 were conducted, and materials for treating debris were evaluated in the same method as in Example 1 using, for each test, 1 $m^3$ of debris having a water content ratio of 40%, which was the same as the debris used for the treatment in Example 1, except that the kinds of gypsum powders constituting respective materials for treating debris were changed to those as shown in Table 2. Specifically, in the constitution of each material for treating debris, the gypsum powder having a BSA specific surface area of 5000 $cm^2/g$, which was the same as used in Example 1-5, was used, and different kinds of gypsum powders as shown in Table 2 were used respectively. Moreover, as the polymer flocculant constituting each material for treating debris, the same polymer flocculant as used in Example 1 was used. The peeling efficiency was measured in the same manner as in Example 1, and obtained results are shown in Table 2. Furthermore, the cone index of the undersize treated soil was measured in a manner as described below, and obtained results are shown together in Table 2.

The cone index test was conducted by the following method in accordance with "Test method for cone index of compacted soils, JIS A 1228".

First of all, the undersize treated soil is placed in a mold having an inner diameter of 10 cm in accordance with JIS A 1210, then the surface is rammed and shaped with a rammer having a mass of 2.5 kg to make a layer, and three layers are finally formed by ramming 25 times for each layer to prepare a test specimen. Next, a cone penetrometer is vertically stood in the center of the upper end face of the obtained specimen, and is penetrated at a speed of 1 cm/s, and when the tip of the cone penetrator penetrates to 5 cm, 7.5 cm, and 10 cm from the end face of the test specimen, the resistance force at respective penetration distances is determined by the readings at respective penetration distances. The cone index qc ($kN/m^2$) is calculated from the average penetration resistance force Qc (N) and the area of the base of the cone tip A ($cm^2$) by the following formula.

$$qc = Qc \times 10/A$$

Table 2: Outline of tests and evaluation results

| (study on influence caused by difference in kind of gypsum powder) | | | | |
|---|---|---|---|---|
| | Example 2-1 | Example 2-2 | Example 2-3 | Example 2-4 |
| Kind of gypsum powder | Dihydrate gypsum | Hemihydrate gypsum | Type II anhydrous | Type III anhydrous |
| Peeling efficiency (%) | 84 | 86 | 84 | 85 |
| Cone index ($kN/m^2$) | 343 | 476 | 356 | 509 |

From the results, as shown in Table 2, it was found that the efficiency of peeling the earth and sand was not changed by the difference in the kind of gypsum used for the treatment tests and any kind of gypsum was applicable as a material for treating debris. Moreover, the undersize treated soil had a cone index of 200 $kN/m^2$ or more and had the strength more than necessary to be transportable when any gypsum was used. Among others, in the system where the hemihydrate gypsum or the type III anhydrous gypsum was used, the undersize treated soil had a strength of 400 $kN/m^2$ or more, which was enough to be utilizable for subgrade/fill-up ground embankment, back filling materials for civil engineering structures, bank of rivers, and land formation.

[Example 3 and Reference Examples 2 and 3 (Study on Difference in Particle Diameter of Polymer Flocculant)]

The same treatment tests as in Example 1 were conducted, and materials for treating debris were evaluated in the same method as in Example 1 using, for each test, 1 $m^3$ of debris having a water content ratio of 40%, which was the same as the debris used for the treatment in Example 1, except that the constitution of each material for treating debris was made as shown in Table 3. Specifically, in the constitution of each material for treating debris, hemihydrate gypsum having a BSA specific surface area of 5000 $cm^2/g$, which was the same as used in Example 1-5, was used as the gypsum powder to set the condition to be constant regarding the gypsum powder, and the polymer flocculants in a form of a powder each having a different particle diameter were used respectively. Specifically, the polymer flocculants each containing 95% or more of particles having a particle diameter equal to or less than the value as shown in Table 3 were used respectively. Obtained results are shown in Table 3.

Table 3: Outline of tests and evaluation results

| (study on influence caused by difference in particle diameter of polymer flocculant) | | | | | |
|---|---|---|---|---|---|
| | Example 3-1 | Example 3-2 | Example 3-3 | Reference Example 2 | Reference Example 3 |
| Particle diameter of polymer flocculant ($\mu$m) | 100 | 150 | 200 | 250 | 300 |
| Peeling efficiency (%) | 88 | 85 | 80 | 70 | 60 |

From the results, as shown in Table 3, it was found that the efficiency of peeling the earth and sand was different depending on the particle size distribution of the polymer flocculant used for constituting the material for treating debris. More specifically, it was found that the obtained peeling efficiency was high when the polymer flocculant in a form of a powder containing 95% or more of particles having a particle diameter of 200 $\mu$m or less, more preferably 150 $\mu$m or less was used. Also in Reference Examples 2 and 3 where the polymer flocculants having a particle diameter larger than 200 $\mu$m were used, the obtained peeling efficiency was high when compared with the peeling efficiency in the case where the conventional method was used, however, in the methods of Reference Examples 2 and 3, the water-absorbing speed was inferior and the time required for peeling operation was long, and it was confirmed that these methods had a problem in terms of prompt treatment, and were inferior in practicability when the actual treatment operation was conducted.

[Example 4, Comparative Examples 1 and 2, and Reference Example 4 (Study on Blending Amount of Polymer Flocculant - Treatment of Debris Having Water Content Ratio of 30%)]

Treatment tests for separating earth and sand from debris were conducted in a manner as described below using, for each test, 1 $m^3$ of actual debris: containing a large amount of earth and sand attributable to huge tsunami generated in the Great East Japan Earthquake adhered thereto; and having a water content ratio of 30%, the water content ratio being lower than the water content ratio in the case of Example 1 in place of the debris having a water content ratio of 40% that was treated in the previous Examples. The same treatment tests as in Example 1 were conducted, and materials for treating debris were evaluated in the same method as in Example 1 except that the blending ratio of the hemihydrate gypsum and the polymer flocculant as the constituent components of each material for treating debris were set as shown in Table 4 and further the use amount of the material for treating debris used in the treatments was made small and set so that the amount of the hemihydrate gypsum was 30 kg. However, as the material for treating debris, each material for treating debris that had been stored for 1 month after blending the gypsum powder and the polymer flocculant was used. Specifically, in the constitution of each material for treating debris, 100 parts of the hemihydrate gypsum having a BSA specific surface area of 5000 $cm^2/g$, which was the same as used in Example 1-5, was used as the gypsum powder, and the polymer flocculant having a particle size distribution containing 95% or more of particles having a particle diameter of 150 $\mu$m or less, which was the same as used in Example 1 were used. Obtained results are shown together in Table 4.

Table 4: Outline of tests and evaluation results

(study on influence caused by difference in blending amount of polymer flocculant)

| | Comparative Example 1 | Comparative Example 2 | Example 4-1 | Example 4-2 | Example 4-3 | Example 4-4 | Example 4-5 | Example 4-6 | Reference Example 4 |
|---|---|---|---|---|---|---|---|---|---|
| Hemihydrate gypsum (parts) | 100 | 100 | 100 | 100 | 100 | 100 | 100 | 100 | 100 |
| Polymer flocculant (parts) | 0 | 0.01 | 0.1 | 0.5 | 2 | 5 | 8 | 10 | 15 |
| Peeling efficiency (%) | 15 | 15 | 30 | 60 | 72 | 80 | 85 | 85 | 72 |

From the results, as shown in Table 4, it was found that the efficiency of peeling the earth and sand was different depending on the blending ratio of the polymer flocculant used for the treatment tests. More specifically, first of all, from the comparison between the case where the polymer flocculant was not blended and the cases of Comparative Examples 1 and 2 where the blending amount of the polymer flocculant was extremely small, the effect of improving the peeling efficiency due to the use of the polymer flocculant was clearly recognized. And it was confirmed that the obtained peeling efficiency was high when the blending amount of the polymer flocculant was set to be 0.1 mass parts or more relative to 100 mass parts of the gypsum powder, suitably 0.5 mass parts or more. Moreover, it was confirmed that the peeling efficiency was improved when the blending amount of the polymer flocculant was made high, but that when the blending amount of the polymer flocculant exceeded 10 mass parts as in Reference Example 4, the polymer flocculant became a lump to lower the water-absorbing performance resulting in deterioration of the peeling efficiency. It was found that the obtained peeling efficiency was sufficient when the blending amount of the polymer flocculant was, taking the material cost into consideration, about 8 mass parts relative to 100 mass parts of the gypsum powder, preferably about 5 mass parts. In addition, with respect to Reference Example 4, the test was conducted using the material for treating debris immediately after blending, and, as a result thereof, the obtained peeling efficiency was high and was about the same level as the peeling efficiency in Example 4-6 where 10 mass parts of the polymer flocculant relative to 100 mass parts of the gypsum powder was blended.

[Example 5, Comparative Examples 3 and 4, and Reference Example 5 (Study on Blending Amount of Polymer Flocculant - Treatment of Debris Having Water Content Ratio of 50%)]

Treatment tests for separating earth and sand from debris were conducted in a manner as described below using, for each test, 1 m$^3$ of actual debris: containing a large amount of earth and sand attributable to huge tsunami generated in the Great East Japan Earthquake, the earth and sand adhered thereto; and having a high water content ratio, as high as 50%, in place of the debris having a water content ratio of 40% that was treated in Example 1. Treatment tests were conducted in the same manner as in Example 1, and the materials for treating debris were evaluated in the same method as in Example 1 except that the blending ratio of the hemihydrate gypsum and the polymer flocculant as the constituent components for each material for treating debris were made as shown in Table 5. However, as the material for treating debris used for the tests, each material for treating debris that had been stored for 1 month after blending the gypsum powder and the polymer flocculant was used. Specifically, the use amount of the material for treating debris was set so that the amount of the hemihydrate gypsum was 50 kg, and, in the constitution of each material for treating debris, the hemihydrate gypsum having a BSA specific surface area of 5000 cm$^2$/g, which was the same as used in Example 1-5, was used as the gypsum powder, and the polymer flocculant containing 95% or more of particles having a particle size distribution of 150 $\mu$m or less, which was the same as used in Example 1, was used as the polymer flocculant. Obtained results are shown in Table 5 .

Table 5: Outline of tests and evaluation results

| (study on influence caused by difference in blending amount of polymer flocculant) | | | | | | | | | |
|---|---|---|---|---|---|---|---|---|---|
| | Comparative Example 3 | Comparative Example 4 | Example 5-1 | Example 5-2 | Example 5-3 | Example 5-4 | Example 5-5 | Example 5-6 | Reference Example 5 |
| Hemihydrate gypsum (parts) | 100 | 100 | 100 | 100 | 100 | 100 | 100 | 100 | 100 |
| Polymer flocculant (parts) | 0 | 0.01 | 0.1 | 0.5 | 2 | 5 | 8 | 10 | 15 |
| Peeling efficiency (%) | 10 | 10 | 35 | 74 | 81 | 83 | 85 | 85 | 72 |

The obtained results were, as shown in Table 5, almost the same as the results shown in Table 4 where the results obtained when the debris having a water content ratio of 30% was treated are shown. From these results, it was able to be confirmed that although a larger amount of the material for treating debris was necessary when the water content ratio of the debris was high than when the water content ratio of the debris was low, the blending ratio of the polymer flocculant did not have to be changed depending on the water content ratio of the debris to be treated.

[Example 6 and Comparative Example 5 (Study on Blending Ratio of Polymer Flocculant When Polymer Flocculant and Gypsum Powder Were Added Separately - Treatment of Debris Having Water Content Ratio of 30%)]

Treatment tests for separating earth and sand from debris were conducted in a manner as described below using, for each test, 1 m$^3$ of actual debris: containing a large amount of earth and sand attributable to huge tsunami generated in the Great East Japan Earthquake, the earth and sand adhered thereto; and having a water content ratio of 30%, the actual debris being the same as treated in Example 4. The ratio of the hemihydrate gypsum and the polymer flocculant that were added to the debris were set as shown in Table 6 (same as in Table 4), however each material for treating debris that was used for the tests was not obtained by blending the gypsum powder and the polymer flocculant in advance, but was obtained by preparing each gypsum powder and polymer flocculant as a set and adding the gypsum powder and the polymer flocculant separately, and thereafter kneading treatment was conducted. In preparing each of the materials for treating debris, 30 kg of the hemihydrate gypsum and a predetermined amount of the polymer flocculant were added relative to 1 m$^3$ of debris, then the resultant mixture was kneaded, and thereafter the treatment tests were conducted, and the materials for testing debris were evaluated in the same method as in the previous Examples. Specifically, the hemihydrate gypsum having a BSA specific surface area of 5000 cm$^2$/g, which was the same as used in Example 1-5, was used as the gypsum powder, and the polymer flocculant containing 95% or more of particles having a particle diameter of 150 $\mu$m or less, which was the same as used in Example 1, was used as the polymer flocculant. Obtained results are shown in Table 6.

Table 6: Outline of tests and evaluation results

| (study on influence caused by difference in blending amount of polymer flocculant) | | | | | | | | | |
|---|---|---|---|---|---|---|---|---|---|
| | Comparative Example 5 | Example 6-1 | Example 6-2 | Example 6-3 | Example 6-4 | Example 6-5 | Example 6-6 | Example 6-7 | Example 6-8 |
| Hemihydrate gypsum (parts) | 100 | 100 | 100 | 100 | 100 | 100 | 100 | 100 | 100 |
| Polymer flocculant (parts) | 0 | 0.05 | 0.1 | 0.5 | 2 | 5 | 8 | 10 | 15 |
| Peeling efficiency (%) | 10 | 34 | 45 | 76 | 80 | 85 | 87 | 88 | 88 |

The obtained results were, as shown in Table 6, almost the same as the results shown in Table 4, however the lowering of the peeling efficiency as observed in Reference Example 4 was not confirmed particularly even in Example 6-8 where 15 parts of the polymer flocculant was added.

[Example 7 and Comparative Example 6 (Study on Difference in Chemical Structure of Polymer Flocculant)]

Treatment tests for separating earth and sand from debris were conducted using, for each test, 1 $m^3$ of actual debris: containing a large amount of earth and sand attributable to huge tsunami generated in the Great East Japan Earthquake, the earth and sand adhered thereto; and having a water content ratio of 30%, the actual debris being the same as treated in Example 4. All the polymer flocculants used in the treatment tests were anionic polymer flocculants each containing, as the main component, a copolymer of acrylamide and sodium acrylate having a different chemical structure, and the difference in superiority of treatment depending on the difference in chemical structure was studied. Specifically, treatment was conducted in the same manner as in Example 4-4 except that a polymer flocculant having a straight chain structure without a branch, a polymer flocculant having a chain structure having a branch, and a netlike polymer flocculant were used for each treatment test. Specifically, the amount of the above-described hemihydrate gypsum added to debris was set to 100 parts, and the blending amount of each polymer flocculant was set to 5 parts. Obtained results are shown in Table 7. As shown in Table 7, the superiority of treating debris using the polymer flocculant having a chain structure that may have a branch, particularly the superiority of treating debris using the polymer flocculant having a straight chain structure without a branch was confirmed.

Table 7: Outline of tests and evaluation results

| (study on influence caused by difference in chemical structure of polymer flocculant) | | | | |
|---|---|---|---|---|
| | Comparative Example 6 | Example 7-1 | Example 7-2 | Example 7-3 |
| Structure of polymer flocculant | Not added | Straight chain | Chain having a branched chain | Netlike |
| Peeling efficiency (%) | 10 | 80 | 70 | 30 |

[Example 8 and Comparative Example 7 (Study on Difference in Ionicity of Polymer Flocculant)]

Treatment tests for separating earth and sand from debris were conducted using, for each test, 1 $m^3$ of actual debris: containing a large amount of earth and sand attributable to huge tsunami generated in the Great East Japan Earthquake, the earth and sand adhered thereto; and having a water content ratio of 30%, the actual debris being the same as treated in Example 4. As the polymer flocculant used in the treatment tests, three kinds of the following polymer flocculants each having a different ionicity were used for respective tests. Specifically, a copolymer of acrylamide and sodium acrylate that was used in other Examples was used as the anionic polymer flocculant, polyacrylamide was used as the nonionic polymer flocculant, and a copolymer of acrylamide and a dimethylaminoethylacrylate methyl chloride quaternary salt were used, and the superiority depending on the difference in ionicity of the polymer flocculant was studied. For any of the treatment tests, the polymer flocculant having a chemical structure without a netlike structure was used. Treatment was conducted in the same manner as in Example 4-4 except the polymer flocculant. Specifically, the amount of the above-described hemihydrate gypsum added to the debris was set to 100 parts, and the blending amount of each polymer flocculant was set to 5 parts. Obtained results are shown in Table 8. As shown in Table 8, it was able to be confirmed that the superiority of treating debris using the anionic or nonionic polymer flocculant, particularly the superiority of treating debris using the anionic polymer flocculant, was obtained as compared with using the cationic polymer flocculant.

Table 8: Outline of tests and evaluation results

| (study on influence caused by difference in polarity of polymer flocculant) | | | | |
|---|---|---|---|---|
| | Comparative Example 7 | Example 8-1 | Example 8-2 | Example 8-3 |
| Polarity of polymer flocculant | Not added | Anionic | Nonionic | Cationic |
| Peeling efficiency (%) | 10 | 80 | 70 | 30 |

**Industrial Applicability**

As a utilization example of the present invention, a useful technology is provided that makes it possible to easily, simply, and efficiently separate earth and sand having an agglutination property from debris without exerting a bad influence on the environment, such separation being a prerequisite for the disposal of an enormous amount of debris produced through the mingling, due to tsunami, of various materials destroyed and torn by strong force of tsunami with the earth and sand although the technology has extremely simple constitution. Therefore, the speed up of treating an enormous amount of debris generated in the Great East Japan Earthquake is achieved, and, as a result thereof, the progress of reconstruction work is expected. Further, the utilization example of the present invention is not limited to the above-described example, further, the application of the technology of the present invention to the treatment of debris unlawfully dumped in mountains, on seashores, or in other places is effective, and the present invention is also expected to contribute to environmental conservation through the treatment of such debris.

**Claims**

1.    A composition for treating debris in order to separate earth and sand from the debris containing the earth and sand adhered thereto, the composition comprising at least 0.1 to 10 mass parts of a polymer flocculant relative to 100 mass parts of gypsum, **characterized in that** the gypsum has a BSA specific surface area of 15000 cm$^2$/g or less, and the polymer flocculant takes a form of a powder comprising 95% or more of particles having a particle diameter of 200 $\mu$m or less.

2.    The composition for treating debris according to claim 1, wherein the gypsum has a BSA specific surface area of 10000 cm$^2$/g or less.

3.    The composition for treating debris according to claim 1 or 2, wherein the polymer flocculant takes a form of a powder comprising 95% or more of particles having a particle diameter of 150 $\mu$m or less.

4.    The composition for treating debris according to any one of claims 1 to 3, wherein the polymer flocculant takes a form of a powder comprising 90% or more of particles having a particle diameter of 10 $\mu$m or more.

5.    The composition for treating debris according to any one of claims 1 to 4, wherein the polymer flocculant is an anionic or nonionic polymer flocculant, and /or wherein the polymer flocculant is a synthetic polymer compound having a chain structure having or not having a branch.

6.    The composition for treating debris according to any one of claims 1 to 5, wherein the gypsum is hemihydrate gypsum or type III anhydrous gypsum, and 95% or more of the gypsum has a particle diameter of 700 $\mu$m or less.

7.    A method for treating debris in order to separate earth and sand from the debris containing the earth and sand adhered thereto, the method comprising:

a treatment step of adding gypsum and a polymer flocculant separately or adding gypsum and a polymer flocculant in a state wherein the gypsum and the polymer flocculant are mixed in advance to the debris containing the earth and sand adhered thereto, and then kneading the resultant mixture; and
a separation step of separating a kneaded product obtained in the treatment step into the debris and the earth and sand adhered to the debris,
**characterized in that** 10 to 100 kg of the gypsum and 0.01 to 10 kg of the polymer flocculant relative to 1 m$^3$ of the debris are added to the debris in the treatment step, wherein the gypsum has a BSA specific surface area of 15000 cm$^2$/g or less, and the polymer flocculant takes a form of a powder comprising 95% or more of particles having a particle diameter of 200 $\mu$m or less.

8.    The method for treating debris according to claim 7, wherein 95% or more of the gypsum has a particle diameter of 700 $\mu$m or less.

9.    The method for treating debris according to claim 7 or 8, wherein the gypsum has a BSA specific surface area of 10000 cm$^2$/g or less.

10.  The method for treating debris according to any one of claims 7 to 9, wherein the polymer flocculant takes a form of a powder comprising 95% or more of particles having a particle diameter of 150 $\mu$m or less.

11. The method for treating debris according to any one of claims 7 to 10, wherein the polymer flocculant takes a form of a powder comprising 90% or more of particles having a particle diameter of 10 $\mu$m or more.

12. The method for treating debris according to any one of claims 7 to 11, wherein the polymer flocculant is an anionic or nonionic polymer flocculant.

13. The method for treating debris according to any one of claims 7 to 12, wherein the polymer flocculant is a synthetic polymer compound having a chain structure having or not having a branch.

14. The method for treating debris according to any of claims 7 to 13, wherein the gypsum is hemihydrate gypsum or type III anhydrous gypsum.

15. The method for treating debris according to any one of claims 7 to 14, wherein the debris containing earth and sand adhered thereto is debris containing earth and sand having a high agglutination property attributable to sea water, the earth and sand adhered to the debris.

**Patentansprüche**

1. Zusammensetzung zur Behandlung von Schutt, um Erde und Sand von dem Schutt zu trennen, der Erde und Sand enthält, die ihm anhaften, wobei die Zusammensetzung 0,1 bis 10 Masseteile eines Polymer-Flockungsmittels, bezogen auf 100 Masseteile Gips umfasst, **dadurch gekennzeichnet, dass** der Gips eine BSA spezifische Oberfläche von 15000 cm$^2$/g oder weniger aufweist und das Polymer-Flockungsmittel in Form eines Pulvers vorliegt, das 95% oder mehr Partikel umfasst, die einen Partikeldurchmesser von 200 $\mu$m oder weniger aufweisen.

2. Die Zusammensetzung zur Behandlung von Schutt nach Anspruch 1, wobei der Gips eine BSA spezifische Oberfläche von 10000 cm$^2$/g oder weniger aufweist.

3. Die Zusammensetzung zur Behandlung von Schutt nach Anspruch 1 oder 2, wobei das Polymer-Flockungsmittel in Form eines Pulvers vorliegt, das 95% oder mehr Partikel umfasst, die einen Partikeldurchmesser von 150 $\mu$m oder weniger aufweisen.

4. Die Zusammensetzung zur Behandlung von Schutt nach einem der Ansprüche 1 bis 3, wobei das Polymer-Flockungsmittel in Form eines Pulvers vorliegt, das 90% oder mehr Partikel umfasst, die einen Partikeldurchmesser von 10 $\mu$m oder mehr aufweisen

5. Die Zusammensetzung zur Behandlung von Schutt nach einem der Ansprüche 1 bis 4, wobei das Polymer-Flockungsmittel ein anionisches oder nichtionisches Polymer-Flockungsmittel ist und/oder wobei das Polymer-Flockungsmittel eine synthetische Polymerverbindung ist, die eine Kettenstruktur aufweist, die eine Verzweigung oder keine Verzweigung aufweist.

6. Die Zusammensetzung zur Behandlung von Schutt nach einem der Ansprüche 1 bis 5, wobei der Gips ein Hemihydrat-Gips oder ein Anhydrit III-Gips ist und 95% oder mehr des Gipses einen Partikeldurchmesser von 700 $\mu$m oder weniger aufweist.

7. Verfahren zur Behandlung von Schutt, um Erde und Sand von dem Schutt zu trennen, der Erde und Sand enthält, die ihm anhaften, wobei das Verfahren umfasst:

einen Behandlungsschritt, in dem Gips und ein Polymer-Flockungsmittel getrennt zugegeben werden oder in dem Gips und das Polymer-Flockungsmittel in einem Zustand dem Schutt, der Erde und Sand enthält, die ihm anhaften, zugegeben werden, in dem der Gips und das Polymer-Flockungsmittel vorher gemischt wurden, und dann Kneten der resultierenden Mischung; und
einen Trennschritt, in dem das geknetete Produkt, das im Behandlungsschritt erhalten wurde, in Schutt und Erde und Sand, die dem Schutt anhaften, getrennt wird,
**dadurch gekennzeichnet, dass** 10 bis 100 kg Gips und 0,01 bis 10 kg des Polymer-Flockungsmittels bezogen auf 1 m$^3$ des Schutts, dem Schutt in dem Behandlungsschritt zugegeben werden, wobei der Gips eine BSA spezifische Oberfläche von 15000 cm$^2$/g oder weniger aufweist und das Polymer-Flockungsmittel in Form eines Pulvers vorliegt, das 95% oder mehr Partikel umfasst, die einen Partikeldurchmesser von 200 μm oder weniger aufweisen.

8. Das Verfahren zur Behandlung von Schutt nach Anspruch 7, wobei 95% oder mehr des Gipses einen Partikeldurchmesser von 700 μm oder weniger aufweisen.

9. Das Verfahren zur Behandlung von Schutt nach Anspruch 7 oder 8, wobei der Gips eine BSA spezifische Oberfläche von 10000 cm$^2$/g oder weniger aufweist.

10. Das Verfahren zur Behandlung von Schutt nach einem der Ansprüche 7 bis 9, wobei das Polymer-Flockungsmittel in Form eines Pulvers vorliegt, das 95% oder mehr Partikel umfasst, die einen Partikeldurchmesser von 150 μm oder weniger aufweisen.

11. Das Verfahren zur Behandlung von Schutt nach einem der Ansprüche 7 bis 10, wobei das Polymer-Flockungsmittel in Form eines Pulvers vorliegt, das 90% oder mehr Partikel umfasst, die einen Partikeldurchmesser von 10 μm oder mehr aufweisen.

12. Das Verfahren zur Behandlung von Schutt nach einem der Ansprüche 7 bis 11, wobei das Polymer-Flockungsmittel ein anionisches oder nichtionisches Polymer-Flockungsmittel ist.

13. Das Verfahren zur Behandlung von Schutt nach einem der Ansprüche 7 bis 12, wobei das Polymer-Flockungsmittel eine synthetische Polymerverbindung ist, die eine Kettenstruktur aufweist, die eine Verzweigung oder keine Verzweigung aufweist.

14. Das Verfahren zur Behandlung von Schutt nach einem der Ansprüche 7 bis 13, wobei der Gips ein Halbhydrat-Gips oder ein Anhydrit III-Gips ist.

15. Das Verfahren zur Behandlung von Schutt nach einem der Ansprüche 7 bis 14, wobei der Schutt, der Erde und Sand enthält, die diesem anhaften, Schutt ist, der Erde und Sand enthält, der eine hohe Agglutinationseigenschaft, die Seewasser zuzuschreiben ist, aufweist, wobei die Erde und der Sand dem Schutt anhaften.


**Revendications**

1. Composition pour le traitement de débris afin de séparer la terre et le sable des débris contenant de la terre et du sable ayant adhéré à ceux-ci, la composition comprenant au moins 0, 1 à 10 parties en masse d'un floculant polymère pour 100 parties en masse de gypse,
   **caractérisée en ce que** le gypse a une surface spécifique BSA de 15 000 cm$^2$/g ou moins, et le floculant polymère prend la forme d'une poudre comprenant 95 % ou plus de particules ayant un diamètre de particule de 200 μm ou moins.

2. Composition pour le traitement de débris selon la revendication 1, dans laquelle le gypse a une surface spécifique BSA de 10 000 cm$^2$/g ou moins.

3. Composition pour le traitement de débris selon la revendication 1 ou 2, dans laquelle le floculant polymère prend la forme d'une poudre comprenant 95 % ou plus de particules ayant un diamètre de particule de 150 μm ou moins.

4. Composition pour le traitement de débris selon l'une quelconque des revendications 1 à 3, dans laquelle le floculant polymère prend la forme d'une poudre comprenant 90 % ou plus de particules ayant un diamètre de particule de 10 μm ou plus.

5. Composition pour le traitement de débris selon l'une quelconque des revendications 1 à 4, dans laquelle le floculant polymère est un floculant polymère anionique ou non-ionique, et/ou dans laquelle le floculant polymère est un composé polymère synthétique ayant une structure à chaîne ayant ou n'ayant pas de ramification.

6. Composition pour le traitement de débris selon l'une quelconque des revendications 1 à 5, dans laquelle le gypse est du gypse hémihydraté ou du gypse anhydre de type III, et 95 % ou plus du gypse ont un diamètre de particule

de 700 μm ou moins.

7.  Procédé pour traiter des débris afin de séparer la terre et le sable des débris contenant de la terre et du sable ayant adhéré à ceux-ci, le procédé comprenant :

une étape de traitement, d'addition de gypse et d'un floculant polymère séparément ou d'addition de gypse et d'un floculant polymère dans un état dans lequel le gypse et le floculant polymère sont mélangés à l'avance aux débris contenant de la terre et du sable ayant adhéré à ceux-ci, et ensuite de malaxage du mélange résultant ; et
une étape de séparation, de séparation d'un produit malaxé obtenu dans l'étape de traitement en les débris et la terre et le sable ayant adhéré aux débris,
**caractérisé en ce que** 10 à 100 kg du gypse et 0,01 à 10 kg du floculant polymère pour 1 m$^3$ des débris sont ajoutés aux débris dans l'étape de traitement, dans lequel le gypse a une surface spécifique BSA de 15 000 cm$^2$/g ou moins, et le floculant polymère prend la forme d'une poudre comprenant 95 % ou plus de particules ayant un diamètre de particule de 200 μm ou moins.

8.  Procédé pour traiter des débris selon la revendication 7, dans lequel 95 % ou plus du gypse ont un diamètre de particule de 700 um ou moins.

9.  Procédé pour traiter des débris selon la revendication 7 ou 8, dans lequel le gypse a une surface spécifique BSA de 10 000 cm$^2$/g ou moins.

10. Procédé pour traiter des débris selon l'une quelconque des revendications 7 à 9, dans lequel le floculant polymère prend la forme d'une poudre comprenant 95 % ou plus de particules ayant un diamètre de particule de 150 pm ou moins.

11. Procédé pour traiter des débris selon l'une quelconque des revendications 7 à 10, dans lequel le floculant polymère prend la forme d'une poudre comprenant 90 % ou plus de particules ayant un diamètre de particule de 10 μm ou plus.

12. Procédé pour traiter des débris selon l'une quelconque des revendications 7 à 11, dans lequel le floculant polymère est un floculant polymère anionique ou non-ionique.

13. Procédé pour traiter des débris selon l'une quelconque des revendications 7 à 12, dans lequel le floculant polymère est un composé polymère synthétique ayant une structure à chaîne ayant ou n'ayant pas de ramification.

14. Procédé pour traiter des débris selon l'une quelconque des revendications 7 à 13, dans lequel le gypse est du gypse hémihydraté ou du gypse anhydre de type III.

15. Procédé pour traiter des débris selon l'une quelconque des revendications 7 à 14, dans lequel les débris contenant de la terre et du sable ayant adhéré à ceux-ci sont des débris contenant de la terre et du sable ayant une forte propriété d'agglutination attribuable à l'eau de mer, la terre et le sable ayant adhéré aux débris.

**EP 3 006 121 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9075772 A
- JP 2012176394 A
- JP 7136613 A
- JP 2009263583 A
- JP 2010207659 A
- JP 2010208870 A